# EUROPEAN PATENT SPECIFICATION

(11) **EP 2 712 011 B1**
(45) Date of publication and mention of the grant of the patent: **12.10.2016**
(21) Application number: 12785959.3
(22) Date of filing: 18.05.2012
(51) Int. Cl.: H01M 8/1213, H01M 8/04746, H01M 4/90, H01M 4/88, H01M 4/86, H01M 8/00, H01M 8/124, H01M 8/243

(54) **SOLID OXIDE TYPE FUEL BATTERY CELL AND METHOD FOR FABRICATING SOLID OXIDE TYPE FUEL BATTERY CELL**
FESTOXIDBRENNSTOFF-BATTERIEZELLE UND VERFAHREN ZUR HERSTELLUNG DER FESTOXIDBRENNSTOFF-BATTERIEZELLE
ELÉMENT DE PILE À COMBUSTIBLE DE TYPE À OXYDE SOLIDE ET PROCÉDÉ DE FABRICATION D'ÉLÉMENT DE PILE À COMBUSTIBLE DE TYPE À OXYDE SOLIDE

(30) Priority: 18.05.2011 JP 2011111262
(43) Date of publication of application: 26.03.2014
(73) Proprietor: Toto Ltd., Fukuoka 802-8601 (JP)
(72) Inventor: SHIONO Mitsunobu, Kitakyushu-shi Fukuoka 802-8601 (JP); FURUYA Seiki, Kitakyushu-shi Fukuoka 802-8601 (JP); TAKASHIO Minoru, Kitakyushu-shi Fukuoka 802-8601 (JP); ANDO Shigeru, Kitakyushu-shi Fukuoka 802-8601 (JP); SHIRAHAMA Hiroshi, Kitakyushu-shi Fukuoka 802-8601 (JP); SHIMAZU Megumi, Kitakyushu-shi Fukuoka 802-8601 (JP); KAWAKAMI Akira, Kitakyushu-shi Fukuoka 802-8601 (JP)
(74) Representative: Witte, Weller & Partner Patentanwälte mbB
(86) International application number: PCT/JP2012/062790
(87) International publication number: WO 2012/157748

(56) References cited:
- EP-A1- 1 513 214
- EP-A1- 1 801 905
- EP-A1- 2 211 405
- JP-A- 6 243 872
- JP-A- 7 105 954
- JP-A- 2001 196 069
- JP-A- 2009 037 873
- JP-A- 2010 232 136
- JP-A- 2010 257 947
- US-A1- 2003 224 240

## Description

### Technical Field

The present invention relates to a solid oxide fuel cell and a method for producing the solid oxide fuel cell.

### Background Art

A solid oxide fuel cell includes a fuel electrode, an air electrode and a solid electrolyte that is interposed between the fuel electrode and the air electrode. In the solid oxide fuel cell, power generating reaction is caused by passing a fuel gas containing hydrogen on the fuel electrode and air as an oxidant gas on the air electrode.

The solid oxide fuel cell is in various forms. For example, a solid oxide fuel cell is known which is provided with a fuel gas flow path thereinside and is configured to cause the power generating reaction by feeding air along the outside of the solid oxide fuel cell (for example, Japanese Patent Application Publication No. 2006-302709). For the solid oxide fuel cell as described above, a structure is known in which fuel is mixed and combusted with the outside air at an opening of the outlet of the fuel gas flow path (for example, Japanese Patent Application Publication No. 2010-277845).

### Summary of Invention

When a solid oxide fuel cell is operated, the fuel gas is supplied into the fuel electrode. Hence, the fuel electrode is exposed to a reducing atmosphere. If the supply of the fuel gas is stopped during the suspension of operations, the air may flow into the fuel electrode through the opening of the outlet of the fuel gas flow path at high-temperature, in some cases. Thus, the fuel electrode expands because of oxidation and consequently causes problems such as cracks in the electrolyte or cell breakage.

It is conceivable that the supply of the fuel gas is continued until the temperature reaches a low-temperature region where the amount of oxidation expansion of the fuel electrode is small. However, in the low-temperature region, the reforming reaction in a reformer that is configured to operate at a upstream process before the fuel gas flows into the solid oxide fuel cell becomes unstable, and C2 or higher fuel gas such as ethane may flow into the fuel electrode gas flow path of the solid oxide fuel cell in some cases. Here, coking on the fuel electrode occurs. More specifically, carbon is deposited onto a catalyst surface of the fuel electrode and thereby suppresses the reaction of the catalyst with the fuel gas to reduce the conductivity of the fuel electrode. In addition, in a case where the fuel electrode serves as a structural support of a cell, the reaction of the fuel electrode and the carbon leads to the expansion of the fuel electrode. Consequently, a problem of deterioration of the fuel electrode arises.

In this respect, there is a demand for a solid oxide fuel cell in which cracks in the electrolyte or cell breakage does not occur even when air flows into the fuel electrode through the opening of the fuel gas outlet at high-temperature.

The present invention has been made in view of these problems, and an object thereof is to provide a solid oxide fuel cell configured to prevent cracks in the electrolyte and cell breakage even when air flows into the fuel electrode following the suspension of operations of the fuel cell.

The present inventors investigated in detail the fuel electrodes of solid oxide fuel cells which have problems of cracks in the electrolyte or cell breakages because of the flow of air into the fuel electrode, experimentally found that some cells with a large amount of oxidation expansion do not have these problems. The inventors further examined the relationship between these problems and the oxidation expansion and found that it is effective in solving the problems to suppress the oxidation expansion speed for several minutes after the stop of the supply of the fuel gas. In other words, the present inventors found that the key point is not the magnitude of the expansion due to oxidation, but the expansion speed. This finding has led to the completion of the present invention.

To solve the above-described problems, the solid oxide fuel cell according to the present invention is a solid oxide fuel cell comprising: a fuel gas flow path; a fuel electrode layer provided around the fuel gas flow path and containing an iron group element and a ceramic; a solid electrolyte layer provided around the fuel electrode layer; and an air electrode layer provided around the solid electrolyte layer, wherein a fuel gas flows into the fuel gas flow path and is exhausted through an opening provided at an end side of the fuel gas flow path, and a regulation process for regulating oxidation expansion speed of the fuel electrode layer is preformed, the oxidation expansion occurring when an oxidant gas flows into the fuel gas flow path through the opening and the solid oxide fuel cell has a high temperature that is

close to temperature during power generation, wherein the fuel electrode layer is obtained by extruding a composite material obtained by drying a slurry that is prepared by dispersing a metal oxide powder containing nickel and a powder containing the stabilized zirconia in a solvent, and the regulation process comprises applying a shear force to the composite material during the extrusion to crush the composite material into primary particles. Here, "provided around" means that a layer may be partially provided around an object. It is not necessary to surround the object entirely with the layer.

In the solid oxide fuel cell comprising the fuel electrode layer subjected to the regulation process, the oxidation expansion speed can be kept low for several minutes from the stop of the supply of the fuel gas. Hence, for example, even when air flows into the fuel electrode through the opening of the fuel gas outlet in a case where the supply of the fuel gas is stopped at high-temperature as in shutdown, the oxidation speed of the fuel electrode layer can be suppressed. This makes it possible to provide a fuel cell which is configured to effectively suppress cracks in the electrolyte and cell breakage. The shutdown may be automatic suspension of the supply of the gas by an alarm device of a microcomputer meter, for example.

Note that the solid oxide fuel cell having the high temperature that is close to temperatures during power generation has a temperature of 500 to 800 °C and more preferably 550 to 700°C.

In addition, in an aspect, the solid oxide fuel cell of the present invention is a solid oxide fuel cell, wherein a linear expansion coefficient per minute of the fuel electrode is 0.09% or less in a period after the oxidant gas begins to flow into the fuel gas flow path through the opening. By suppressing the expansion rate as described above, the stress applied to the electrolyte by the expansion of the fuel electrode can be relaxed, so that cracks in the electrolyte and cell breakage can be prevented.

The linear expansion coefficient per minute of the fuel electrode is preferably 0.04% or less. This suppresses a stress due to cell expansion on a collector in close contact with the cell, so that the current collection loss due to the decrease in adhesion occurring when the shutdown is repeated can be prevented. The linear expansion coefficient per minute is further preferably 0.03% or less. Within such a range, an abrupt change in stress at a localized portion such as a gas seal portion because of the oxidation expansion can be suppressed, and hence seal failure can be prevented even when the shutdown is repeated 100 times or more.

Moreover, in an aspect, the fuel electrode layer of the solid oxide fuel cell of the present invention comprises a composite material obtained by drying a slurry that is prepared by dispersing a metal oxide powder containing the iron group element and a powder containing the ceramic in a solvent, and the regulation process includes a step of adjusting a dispersed particle size of the slurry to less than 10 µm. Here, the "powder containing the ceramic" is a powder as a raw material for obtaining a molded material.

Such a dispersed particle size makes it possible to suppress the expansion speed of the fuel electrode layer, and hence to provide a fuel cell with cracks in the electrolyte and cell breakage effectively suppressed.

In the present invention, the dispersed particle size of the slurry is preferably adjusted to 3 µm or less, and further preferably to 1 µm or less. In addition, the dispersed particle size is preferably 50 nm or more. Within such a range, the particles of the fuel electrode can be dispersed more uniformly, so that the expansion speed of the fuel electrode layer can be further suppressed. Hence, even in a case of a module which is fabricated by bundling one hundred and several tens of cells together and operated with a temperature variation of several tens of degrees centigrade, the variation in expansion speed is suppressed, so that cracks in the electrolyte and cell breakage can be suppressed effectively even when the shutdown is conducted repeatedly.

In an aspect, the fuel electrode layer is obtained by extruding a composite material obtained by drying a slurry that is prepared by dispersing a metal oxide powder containing the iron group element and a powder containing the ceramic in a solvent, and the regulation process includes a step of applying a shear force to the composite material during the extrusion to thereby crush the composite material into primary particles. Here, the crush into primary particles means that a shear force is applied to the powder of the composite material to an extent that the composite material are ground to thereby increase the ratio of the primary particles.

Note that the extrusion of the composite material means that the composite material is mixed with additives such as an organic binder, water, and a plasticizer to be extruded in a wet manner.

This makes it possible to crush aggregations of particles into primary particles, and uniformly pack the particles to constitute the fuel electrode layer. Hence, it is possible to provide a fuel cell in which the expansion rate of the fuel electrode layer can be suppressed and cracks in the electrolyte and cell breakage can be effectively suppressed. When the raw material is uniformly dispersed before the molding, the micro structure of the fuel electrode layer is further optimized, and the ceramic particles serving as the skeleton of the fuel electrode layer and the metal oxide particles which expand because of oxidation are uniformly arranged like a network. Hence, the expansion occurs uniformly, so that cracks in the electrolyte and cell breakage can be suppressed effectively, even when the shutdown is repeated.

In addition, in an aspect, the iron group element in the fuel electrode of the present invention comprises nickel.

By employing nickel as the iron group element, the electron conductivity of the fuel electrode layer exposed to a reducing atmosphere can be ensured. At the same time, since nickel is more resistant to oxidation than cobalt and iron, it is possible to provide a fuel cell in which the oxidation expansion speed of the fuel electrode layer can be suppressed at the high-temperature that is close to temperature during power generation.

In an aspect, the ceramic in the fuel electrode of the present invention comprises a stabilized zirconia.

Furthermore, the stabilized zirconia in the fuel electrode of the present invention comprises yttria-stabilized zirconia.

The ceramic in the fuel electrode of the present invention comprises a stabilized zirconia. The stabilizer includes calcia, scandia, yttria, and the like. Yttria-stabilized zirconia is more preferable from the viewpoint of increasing the skeleton strength of the fuel electrode and making the cell more resistant to breakage when the fuel electrode expands because of oxidation.

Especially, when the fuel electrode serves as a support, the ceramic in the fuel electrode comprises preferably yttria-stabilized zirconia from the viewpoints of excellent strength and high stability as a support.

Moreover, in an aspect, the opening of the present invention is provided with a regulation unit that regulates oxidant gas flow so as to increase a pressure loss when the oxidant gas flows into the opening. Here, the regulation unit comprises an oxidant gas flow regulation path and a body. The oxidant gas flow regulation path has a smaller cross-sectional opening area than an opening of the fuel gas flow path. Through the oxidant gas flow regulation path, a fuel gas coming from the fuel gas flow path flows to the outside of the cell in an ordinary operation. The oxidant gas flow regulation path plays a role of guiding the flow of the fuel gas to the outside of the cell, and of increasing the pressure loss of the gas by the flow path narrower than the opening of the fuel gas flow path and thus suppressing the amount per unit time of the oxidant gas flowing into the fuel gas flow path of the cell. The cross-sectional shape of the oxidant gas flow regulation path is not particularly limited, and may be of a circular or polygonal shape. Multiple flow paths that regulate oxidant gas flow may be provided, as long as the total cross-sectional area thereof is smaller than the cross-sectional area of the opening of the cell. By providing the oxidant gas flow regulation path, the pressure loss of the oxidant gas is increased, and the flow of oxygen to the fuel electrode is suppressed, so that the oxidation expansion speed of the fuel electrode layer can be suppressed, and cracks in the electrolyte and cell breakage can be prevented. The body guides the fuel gas exhausted through the opening of the fuel gas flow path to the oxidant gas flow regulation path. In addition, the body isolates the fuel gas flow path from the oxidant gas present around the cell, and allows the oxidant gas to flow in only through the oxidant gas flow regulation path. The body is also capable of fixing the oxidant gas flow regulation path to the cell. In addition, by interposing a seal portion between the body and the cell, a gas sealing function can also achieved. The body is provided so as to cover the opening, and may cover the periphery of the cells or an end portion of the cell. Moreover, the body may cover both of them.

Since the pressure loss of the flow of the oxidant gas in the opening is increased, the oxidant gas becomes difficult to flow into the fuel flow path through the opening at the shutdown when the supply of the fuel gas is stopped and the solid oxide fuel cell has a high temperature that is close to temperature during power generation. Hence, the oxidation expansion of the fuel electrode layer can be suppressed. As a result, cracks in the electrolyte and cell breakage due to the shutdown can be prevented.

Moreover, in an aspect, the regulation unit of the present invention comprises an oxidant gas flow regulation path having a smaller cross-sectional area than the opening, and the oxidant gas flow regulation path communicates with the fuel gas flow path.

This makes it difficult for the oxidant gas to flow into the fuel flow path through the opening, thereby making it possible to suppress the oxidation expansion of the fuel electrode layer. As a result, cracks in the electrolyte and cell breakage due to the shutdown can be prevented.

Moreover, in an aspect, the regulation unit has a body covering at least the opening and a reduced diameter portion extending from the body in a projecting manner and having a smaller diameter than that of the body. Here, the reduced diameter portion is the oxidant gas flow regulation path extends from the body of the regulation unit to the outside of the cell. The reduced diameter portion has a smaller cross-sectional opening area than the opening of the fuel gas flow path, as in the case of the oxidant gas flow regulation path. The reduced diameter portion has a function of further increasing the pressure loss of the oxidant gas and further suppressing the flow of oxygen to the fuel electrode. The reduced diameter portion may be provided in the regulation unit but is not necessarily provided. The reduced diameter portion may be formed integrally with the body, and may be formed at any position of the body. The shape of the reduced diameter portion may be straight or bent.

Materials of the oxidant gas flow regulation path, the reduced diameter portion, and the body are not particularly limited. Examples thereof include iron-chromium based alloys, nickel-chromium based alloys, and the like. Note that, in a case of a solid oxide fuel cell in which the fuel electrode serves as a support, the regulation unit can also play a role of an electrode terminal (inner electrode terminal) on the fuel electrode by employing a body having electrical conductivity.

In addition, in an aspect, a fuel cell system of the present invention comprises the above-described solid oxide fuel cell.

### Advantageous Effect of Invention

In the solid oxide fuel cell of the present invention, the oxidation expansion speed after the stop of the supply of the fuel gas, especially, the oxidation expansion speed for a first several minutes can be kept low. Hence, it is possible to effectively suppress cracks in the electrolyte and cell breakage even when air flows in through the opening on the fuel gas outlet to the fuel electrode in a high-temperature state. Brief Description of Drawings
Fig. 1 is a cross-sectional view of a single solid oxide fuel cell of the present invention.
Fig. 2 is a view showing an overall configuration of a solid oxide fuel cell system according to one embodiment of the present invention.
Fig. 3 is a view showing a solid oxide fuel cell stack according to one embodiment of the present invention.
Fig. 4 is a view showing a solid oxide fuel cell unit according to one embodiment of the present invention.
Fig. 5 is a cross-sectional side view showing a fuel cell module of a solid oxide fuel cell system according to one embodiment of the present invention.
Fig. 6 is a cross-sectional view taken along the line III - III Fig. 5.
Fig. 7 is a graph showing the change with time in amount of oxidation expansion.
Fig. 8 is a graph showing a linear expansion coefficient per minute.
Fig. 9 is a view showing a micro structure of a fuel electrode of a solid oxide fuel cell which was not an embodiment of the present invention and which was subjected to a shutdown test.

### Description of Embodiments

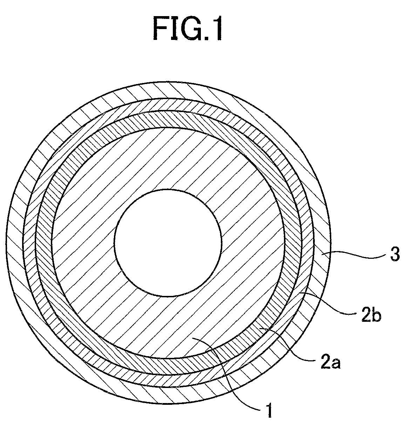

Hereinafter, a solid oxide fuel cell of the present invention is described. Fig. 1 shows a form of a cross section of a single solid oxide fuel cell of the present invention, where a type having a fuel electrode serving as a support is shown. The solid oxide fuel cell of the present invention includes, for example, a fuel electrode support 1 (for example, a composite material of Ni and/or NiO and Y₂O₃-doped a zirconium-containing oxide) ; a solid electrolyte layer 2 being formed on a surface of the fuel electrode support and including a first layer 2a (for example, a cerium-containing oxide represented by Ce₁₋ₓLaₓO₂ (provided that 0.30≤x≤0.50)) and a second layer 2b (lanthanum-gallate oxide) ; and an air electrode 3 (for example, a lanthanum-cobalt-based oxide or samarium-cobalt-based oxide) formed on a surface of the solid electrolyte.

The operation principle is shown below with the solid oxide fuel cell shown in Fig. 1 taken as an example. When air flows at the air electrode and fuel flows at the fuel electrode, oxygen in the air is converted into oxygen ions near the interface between the air electrode and the solid electrolyte layer, and the oxygen ions flow through the solid electrolyte layer to reach the fuel electrode. Then, the fuel gas and the oxygen ions react with each other to form water and carbon dioxide. These reactions are represented by formulae (1), (2), and (3). By connecting the air electrode and the fuel electrode with an external circuit, the electricity can be extracted to the outside.

H₂+O²⁻→H₂O+2e⁻ (1)

CO+O²⁻→CO₂+2e⁻ (2)

1/2O₂+2e⁻→O²⁻ (3)

Note that it is also reported that CH₄ etc. contained in the fuel gas undergo reactions which are similar to those of formulae (1) and (2) to generate electrons. However, most reactions in power generation by a solid oxide fuel cell can be explained based on formulae (1) and (2). Hence, description here is given based on formulae (1) and (2).

The solid electrolyte layer in the present invention is not particularly limited, as long as oxygen ions that are necessary for the power generation can flow through the solid electrolyte layer from the air electrode to the fuel electrode. The solid electrolyte layer is more preferably an electrolyte layer containing lanthanum-gallate oxide, because the electrolyte layer containing lanthanum-gallate oxide permits the power generation to be carried out at a lower power generation temperature (550 to 700°C), so that the oxidation of the fuel electrode layer is less likely to occur, and cracks in the electrolyte and cell breakage can be suppressed effectively. In addition, the solid electrolyte layer may have, for example, a double-layer structure including a cerium-containing oxide represented by Ce₁₋ₓLaₓO₂ (provided that 0.30≤x≤0.50) and lanthanum-gallate oxide.

When the solid electrolyte layer of the present invention has a double-layer structure including a cerium-containing oxide and lanthanum-gallate oxide, the cerium-containing oxide contained in the first layer is preferably represented by general formula Ce₁₋ₓLaₓO₂ (provided that 0.30≤x≤0.50), from the viewpoint of its low reactivity with the second layer made of lanthanum-gallate oxide. The above-described composition makes it possible to prevent most effectively the reaction with the solid electrolyte layer made of lanthanum-gallate oxide. Hence, the power generation performance improves. Note that the optimum La doping varies within the above-described range depending on the composition of the lanthanum-gallate oxide used for the second layer. The La doping is more preferably 0.35≤x≤0.45 in view of the use of the lanthanum-gallate oxide having a composition with a high oxygen ion conductivity for the second layer (for example, a lanthanum-gallate oxide represented by general formula La₁₋ₐSrₐGa_{1-b-c}Mg_{b}Co_{c}O₃ (provided that 0.05≤a≤0.3, 0≤b≤0.3, 0≤c≤0.15)). For example, when the composition of the lanthanum-gallate oxide is La_{0.8}Sr_{0.2}Ga_{0.8}Mg_{0.2}O₃ or La_{0.9}Sr₀.₁Ga₀.₈Mg_{0.2}O₃, the La doping is more preferably 0.4≤x≤0.45.

A sintering additive may be added to the cerium-containing oxide layer. It is preferable that the sintering additive to be added improves the denseness of the cerium-containing oxide layer and has less reaction with the surrounding materials. We have conducted various studies on the sintering additive and consequently have found that Ga element is effective. It is preferable that for example, gallium oxide (Ga₂O₃), a gallium compound which turns into Ga₂O₃ during a firing step, or the like is used as a Ga element source.

When the amount of Ga element in the cerium-containing oxide layer is represented by X wt% in terms of oxide, it is preferable that 0<X≤5. This is because the cerium-containing oxide layer becomes denser by limiting the amount of Ga element to the above-described range, so that the reaction between the support and the lanthanum-gallate oxide layer can be suppressed effectively, and the resistance loss in the cerium-containing oxide layer decreases. A further preferable range of X is 0.3<X<2.0. This is because, in addition to the above-described effects, the electric conductivity of the cerium-containing oxide itself improves, and hence the resistance loss in the first layer further decreases.

The film thickness of the cerium-containing oxide layer is preferably 3 to 50 µm. Furthermore, 3 to 40 µm is more preferable.

This is because, by setting the thickness of the cerium-containing oxide layer larger than 3 µm, formation of defects can be prevented during film formation of the cerium-containing oxide, and the reaction between the support and the lanthanum-gallate oxide layer can be suppressed. By setting the thickness of the cerium-containing oxide layer smaller than 50 µm, the influence of the resistance loss in the cerium-containing oxide layer can be suppressed, and by setting the thickness to 40 µm or less, the influence of resistance loss in the cerium-containing oxide layer can be suppressed further. Hence, the thickness of the cerium-containing oxide layer is preferably as thin as possible within the range where the reaction between the support and the lanthanum-gallate oxide layer can be sufficiently prevented.

The film thickness of the lanthanum-gallate oxide layer is preferably 20 to 70 µm and further more preferably 20 to 50 µm.

This is because, by setting the thickness of the lanthanum-gallate oxide layer to 20 µm or more, the stress due to oxidation expansion of the fuel electrode becomes less likely to cause cracks in the electrolyte. By setting the thickness smaller than 70 µm, the influence of the resistance loss in the lanthanum-gallate oxide layer can be suppressed, and by setting the thickness to 50 µm or less, the influence of the resistance loss in the lanthanum-gallate oxide layer can be suppressed further.

Note that the solid oxide fuel cell of the present invention is not limited to have the structure in which the solid electrolyte and the fuel electrode layer are in direct contact with each other. For example, the solid oxide fuel cell may be one in which a fuel electrode layer serves as a support and a fuel electrode catalyst layer having an enhanced catalytic activity is provided between the support and an electrolyte. Since the fuel electrode catalyst layer can relax the stress on the electrolyte membrane generated by oxidation expansion of the fuel electrode, it is preferable to provide the fuel electrode catalyst layer. The porosity of the fuel electrode catalyst layer is preferably 20 to 50% in an operating state considering the balance between stress relaxation and catalytic activity.

The fuel electrode catalyst layer is preferably obtained by mixing NiO with a CeO₂-based material. NiO is reduced to Ni during operation. The CeO₂-based material is preferably CeO₂ doped with 10 to 20 mol% of Gd. The weight ratio of NiO to the CeO₂-based material mixed is preferably 40:60 to 60:40 as a mixing ratio. The film thickness of the fuel electrode catalyst layer is preferably about 5 to 30 µm. This is because, by setting the film thickness to 5 µm or more, the catalytic activity of the fuel electrode catalyst layer can be suppressed effectively. By setting the film thickness to 30 µm or less, the possibility of peeling of the film can be suppressed during film formation. The film thickness of the fuel electrode catalyst layer is more preferably about 10 to 30 µm from the viewpoint of relaxing the stress due to the oxidation expansion of the fuel electrode, and thereby preventing cracks in the electrolyte.

The fuel electrode layer of the present invention comprises an iron group element and a ceramic. It is preferable that the fuel electrode layer includes a material which has high electron conductivity and allows the reactions of formulae (1) and (2) to proceed efficiently in a fuel atmosphere of the solid oxide fuel cell.

From these viewpoints, preferred iron group elements include nickel, iron, and cobalt, in which nickel is used. The use of nickel makes it possible to ensure the electron conductivity of the fuel electrode layer exposed to a reducing atmosphere. Simultaneously, since nickel is more resistant to oxidation than iron and cobalt. Occurrence of cracks in the electrolyte and cell breakage due to the oxidation expansion can be more suppressed when nickel is used. Moreover, since nickel has a better catalytic activity for hydrogen in the fuel gas than iron, the reaction of formula (1) can be carried out more efficiently.

In addition, the ceramic which forms the fuel electrode layer of the present invention is not particularly limited, as long as it is capable of forming a skeleton of the fuel electrode layer and ensuring the strength of the fuel electrode layer. An oxide having oxygen ion conductivity is preferable from the viewpoint of carrying out the reactions of formulae (1) and (2) efficiently. From the viewpoints of matching the thermal expansion with that of the electrolyte and suppressing the reaction with the electrolyte, an oxygen ion conductive oxide used for an electrolyte is more preferable, and examples thereof include zirconium-containing oxides, cerium-containing oxides, lanthanum-gallate oxides, and the like.

A preferred zirconium-containing oxide is, for example, a stabilized zirconia doped with one or more of CaO, Y₂O₃, and Sc₂O₃. Yttria-stabilized zirconia (YSZ) is further preferable.

This increases the skeleton strength of the fuel electrode, so that the cell can be resistant to breakage when the fuel electrode expands because of oxidation. In addition, yttria-stabilized zirconia has better durability since it has a lower reactivity with other materials than calcia-stabilized zirconia has and is less expensive than scandia-stabilized zirconia.

Meanwhile, the cerium-containing oxide is represented by the general formula Ce_{1-y}Ln_{y}O₂ (provided that Ln is one of La, Pr, Nd, Sm, Eu, Gd, Tb, Dy, Ho, Er, Tm, Yb, Lu, Sc, and Y, or a combination of two of more them and 0.05≤y≤0.50). A cerium-containing oxide is reduced in a fuel atmosphere from Ce⁴⁺ to Ce³⁺, and electron conductivity is exhibited by the excess electrons. Hence, a cerium-containing oxide serves as a mixed conductor whose conducting species are electrons and oxygen ions.

The lanthanum-gallate oxide is not particularly limited and is preferably La₁₋ₐSrₐGa₁-_{b}-_{c}Mg_{b}Co_{c}O₃ (provided that 0.05≤a≤0.3, 0≤b≤0.3, 0≤c≤0.15) for carrying out the reactions of formulae (1) and (2) more efficiently.

Examples of materials for forming the fuel electrode layer of the present invention include NiO/zirconium-containing oxide, NiO/cerium-containing oxide, NiO/lanthanum-gallate oxide, and the like. The NiO/zirconium-containing oxide, the NiO/cerium-containing oxide, and the NiO/lanthanum-gallate oxide herein refer to uniform mixtures of NiO with zirconium-containing oxide, cerium-containing oxide, and lanthanum-gallate oxide, respectively, at predetermined ratios. In addition, since NiO is reduced to Ni in a fuel atmosphere, the mixtures are converted into Ni/zirconium-containing oxide, Ni/cerium-containing oxide, and Ni/lanthanum-gallate oxide, respectively.

The fuel electrode layer of the present invention can be fabricated by forming a molded material by using, as raw materials, a metal oxide powder containing an iron group element and a powder of a ceramic. Note that each of the metal oxide powder containing an iron group element and the powder containing a ceramic herein is a powder as a raw material for obtaining the molded material and refers to a powder before firing in the fabrication of the solid oxide fuel cell.

In the present invention, the mixing ratio of the metal oxide powder containing an iron group element to the powder containing a ceramic is preferably 30:70 to 75:25 in terms of weight ratio considering that an electron conductivity necessary for the power generation can be ensured and the coefficient of thermal expansion of the fuel electrode is matched with that of the electrolyte membrane. Moreover, the mixing ratio of the metal oxide powder containing an iron group element to the powder containing a ceramic is more preferably 55:45 to 75:25 in terms of weight ratio also from the viewpoint that when the amount of the metal of an iron group element is large, the fuel electrode, which expands because of oxidation upon contact with air, itself deforms plastically, so that cracks are less likely to be formed in the electrolyte. Note that the mixing ratio after the firing is substantially equal to the mixing ratio of the powders before firing.

The particle size ratio of the average particle size containing the metal oxide of an iron group element to that of the ceramic is preferably 1.00 to 3.30, and more preferably 1.00 to 1.25. The particle size ratio can make the oxidation expansion of the fuel electrode more uniform over the entire fuel electrode. Hence, cracks in the electrolyte and cell breakage can be prevented even when the shutdown is conducted repeatedly. Note that it does not matter which particle size is greater the metal oxide containing an iron group element or the ceramic, and as long as both the particle diameters only need to be about the same.

The average particle sizes of the metal oxide containing an iron group element and the ceramic are determined by the following method. A cell piece obtained by cutting a part from the cell is embedded in a resin and then these are ground to an extent that a cross section of the cell is exposed. For the grinding, cross-section ion milling is carried out. A backscattered electron image of a fuel electrode layer portion of the processed surface on which the ion milling was conducted is observed with a high-resolution field emission scanning electron microscope (FE-SEM) equipped with an annular backscattered electron detector. The acceleration voltage was 25 kV. In the observed backscattered electron image, particles containing an element having a higher atomic number appear brighter. On the other hand, particles having a lower atomic number appear relatively dim in the observation. Particles of the metal oxide containing an iron group element and particles of the ceramic are distinguished from each other on the basis of the difference in tone, and the sizes of these particles are measured. For example, for a particle having a substantially circular shape, its diameter is employed as the particle size, and, for a particle having a substantially square shape, the length of one side thereof is employed as the particle size. The particle sizes of randomly selected 100 particles are measured with any magnification, and the particle sizes of the 3rd to 97th particles arranged in ascending order of diameter are averaged.

The dispersed particle size of the slurry of the present invention can be determined by the following method. Specifically, slurry is prepared by dispersing the metal oxide powder containing the iron group element and the powder containing the ceramic in a solvent. The slurry is further introduced dropwise to a small-volume sample recirculator (model: MICROTRAC-SVR-SC) of a Microtrac particle-size measuring apparatus MT3300EX of NIKKISO CO., LTD., and the dispersed particle size is measured by a method according to JIS R1629 using the laser diffraction/scattering method. The dispersed particle size is a volume average particle size calculated by volume averaging, and of the particle sizes are measured twice and two measurements were averaged. As software for analysis, a Microtrac particle-size analyzer Ver. 10.1.2-018SD is used. The circulator pump speed is set at the circulation flow rate of 3.0 to 4.2 L/min. The measurement is conducted without stirring blades or ultrasonic wave in a dispersion vessel. The measurement conditions are that, for a case where the solvent of the slurry is water, the refractive index of the solvent is regarded as 1.333, the refractive index of the powder is regarded as 1.81, the Setzero time is 30 seconds, and the measuring time is 30 seconds. The dispersed particle size of the slurry refers to the volume average particle size of secondary particles dispersed in the slurry. When powders of the same average particle size are used, a smaller dispersed particle size indicates that the powders in the solvent are dispersed more uniformly without local aggregation.

A composite material for forming the fuel electrode can be obtained by drying the above-described slurry. Note that the drying method is not particularly limited, as long as water is vaporized with the particles uniformly dispersed in the slurry. Note that, in the present invention, a spray drying method is preferable in which the slurry is sprayed into a heating gas and dried rapidly to produce a dry powder, from the viewpoint that water can be vaporized easily with the particles are uniformly dispersed in the slurry.

In the present invention, a firing method for a case where a solid oxide fuel cell is fabricated by a sintering method is not particularly limited, as long as a high output can be obtained. Specifically, the method may be a sequential firing method or a co-firing method in which at least two of or desirably all of the members are sintered at once. Note that, the co-firing method is more preferable because the number of the mass production processes is reduced, resulting in good productivity.

In the co-firing, for example, a cell fabrication method is preferable which comprises the steps of: preparing a molded material of a fuel electrode support or an air electrode support followed by pre-firing at 800°C to 1200°C; forming a solid electrolyte layer on a surface of the obtained fired material and co-sintering the solid electrolyte layer with the support at 1200°C to 1400°C; and forming the other electrode on a surface of the sintered solid electrolyte layer followed by sintering at 800°C to 1200°C. Note that the sintering temperature in the co-firing of the support and the electrolyte is more preferably 1250°C to 1350°C from the viewpoints of inhibiting the diffusion of metal components from the support and of obtaining a gas-impermeable solid electrolyte layer.

The solid oxide fuel cell system of the present invention is not particularly limited as long as the solid oxide fuel cell system includes the solid oxide fuel cell of the present invention. The production thereof, other materials, and the like may be, for example, publicly-known ones.

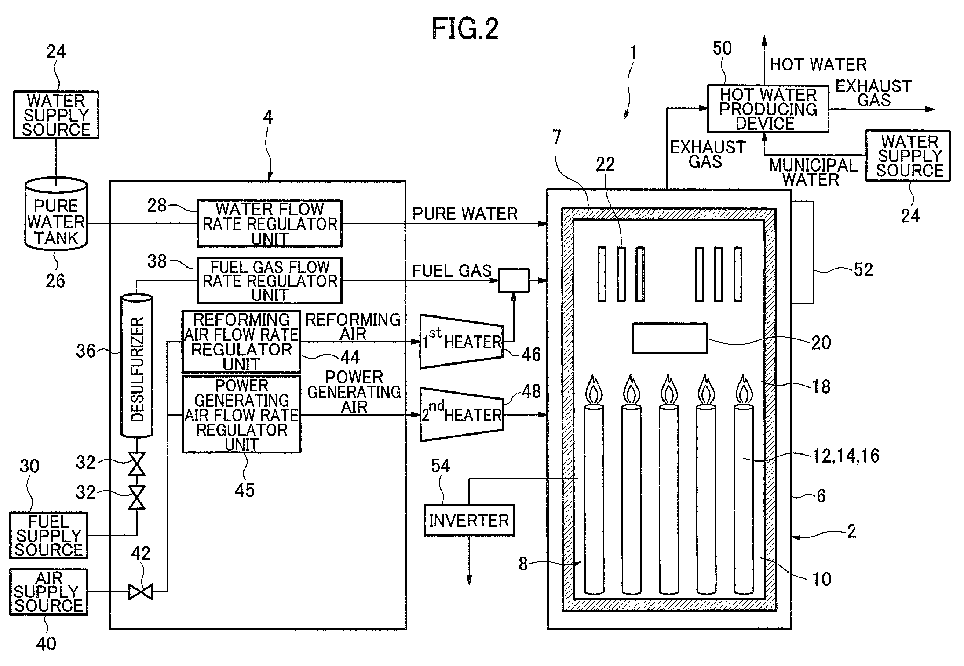

Fig. 2 is a view showing an overall configuration of a solid oxide fuel cell system according to one embodiment of the present invention. As shown in Fig. 2, a solid oxide fuel cell system 1 according to the embodiment of the present invention includes a fuel cell module 2 and an auxiliary unit 4.

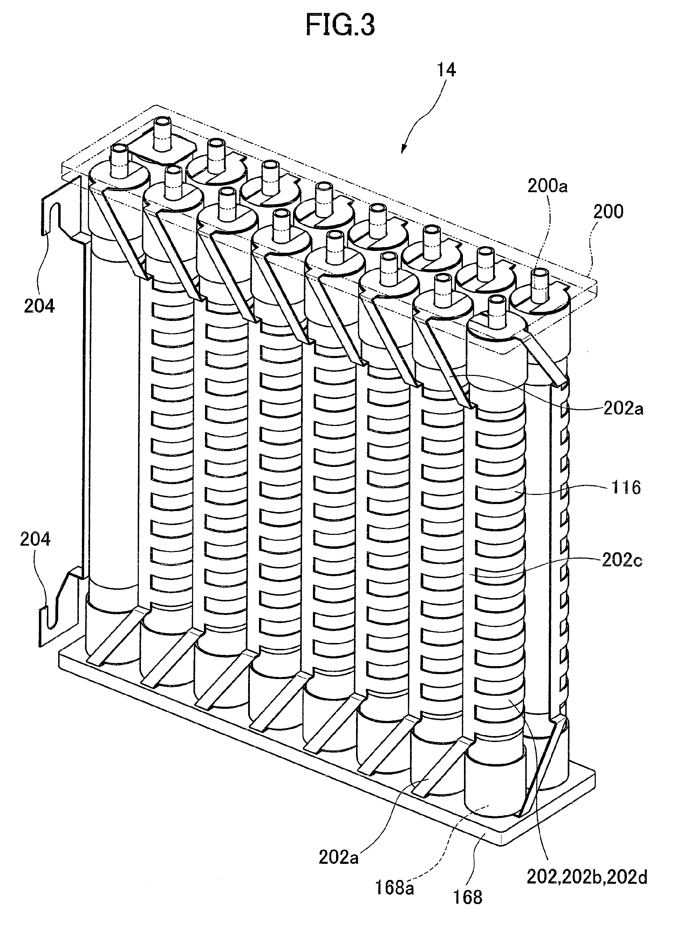

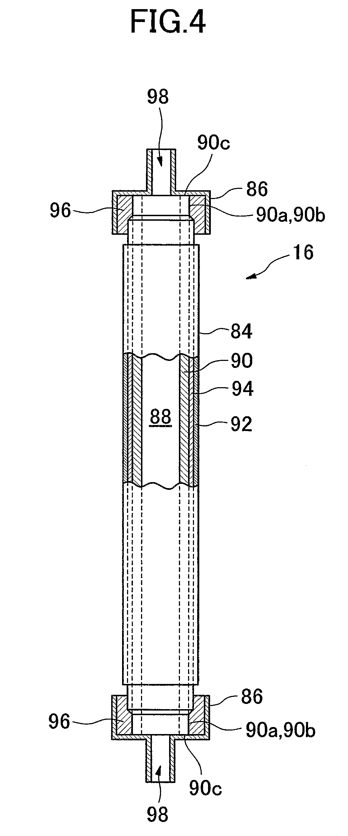

The fuel cell module 2 includes a housing 6. The housing 6 with an insulating material has a sealed space 8 therein. It should be noted that the insulating material is not an indispensable structure and may be omitted. A lower portion of the sealed space 8 is a power generating chamber 10 in which a fuel cell assembly 12 is disposed. The fuel cell assembly 12 carries out power generating reaction between fuel gas and oxidant (air). The fuel cell assembly 12 includes ten fuel cell stacks 14 (see Fig. 3), and each of the fuel cell stacks 14 includes 16 fuel cell units 16 (see Fig. 4). Thus, the fuel cell assembly 12 includes 160 fuel cell units 16, and all the fuel cell units 16 are serially connected.

In the sealed space 8 of the fuel cell module 2, a combustion chamber 18 is formed above the above-described power generating chamber 10. In the combustion chamber 18, residual fuel gas and residual oxidant (air) not used in the power generating reaction are combusted to produce exhaust gas. Above the combustion chamber 18, a reformer 20 for reforming fuel gas is disposed. The reformer 20 is heated by the heat of combustion of the residual gas to a temperature at which reforming reaction can take place. Above the reformer 20, an air heat exchanger 22 is disposed which receives the heat of the reformer 20 to heat air and which suppresses a decrease in the temperature of the reformer 20.

The auxiliary unit 4 includes a pure water tank 26 for storing water from a water supply source 24 such as a municipal water to make the water into pure water, and a water flow rate regulator unit 28 for regulating the flow rate of water supplied from the reservoir tank. The auxiliary unit 4 further includes a gas shutoff valve 32 for shutting off fuel gas, such as municipal gas, supplied from the fuel supply source 30, a desulfurizer 36 for desulfurizing the fuel gas, and a fuel gas flow rate regulator unit 38 for regulating the flow rate of the fuel gas. Furthermore, the auxiliary unit 4 includes an electromagnetic valve 42 for shutting off air as an oxidant supplied from an air supply source 40, a reforming air flow rate regulator unit 44 and a power generating air flow rate regulator unit 45 for regulating the flow rates of air, a first heater 46 for heating reforming air supplied to the reformer 20, and a second heater 48 for heating power generating air supplied to the power generating chamber. The first and second heaters 46 and 48 are provided to efficiently raise temperature at startup, but may be omitted.

The fuel cell module 2 is connected to a hot-water producing device 50, which is supplied with exhaust gas. The hot-water producing device 50 is supplied with municipal water from the water supply source 24. This municipal water is turned into hot water by the heat of the exhaust gas to be supplied to a hot water reservoir tank in an unillustrated external water heater. Moreover, the fuel cell module 2 is provided with a control box 52 for controlling the supply flow rate of the fuel gas and the like. Further, the fuel cell module 2 has an inverter 54 connected thereto. The inverter 54 serves as an electrical power extraction unit (electrical power conversion unit) for supplying electrical power generated by the fuel cell module to the outside.

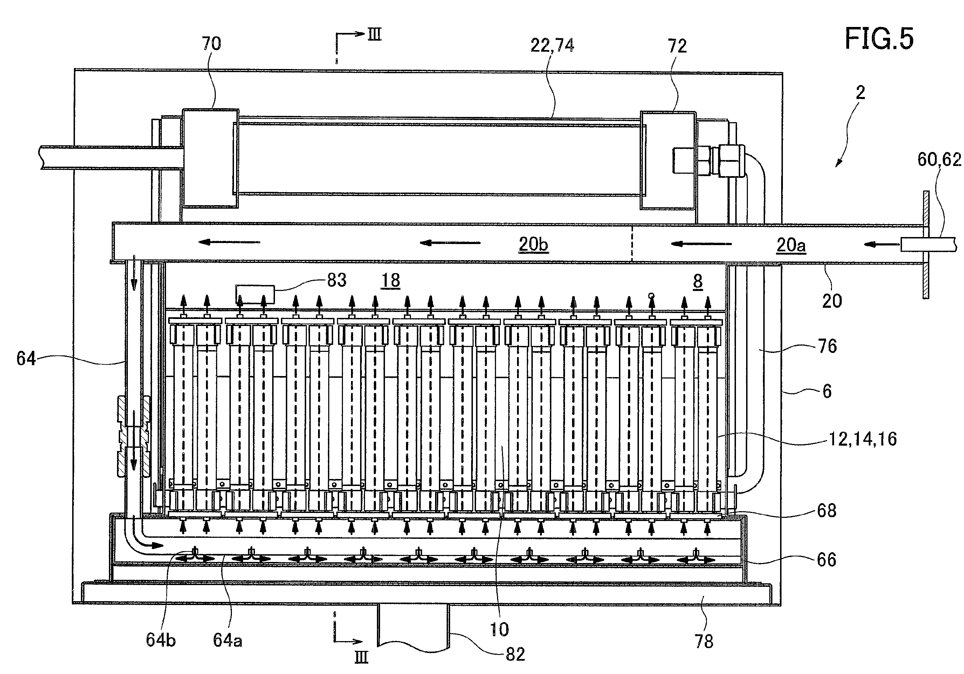

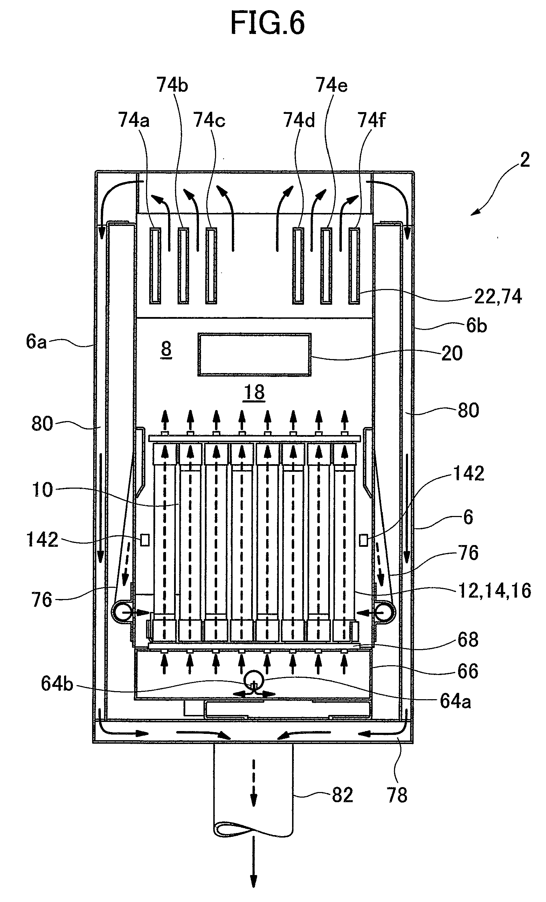

Next, with reference to Figs. 5 and 6, a description will be made of the internal structure of the fuel cell module of the solid oxide fuel cell system according to the embodiment of the present invention. Fig. 5 is a side cross-sectional view showing the fuel cell module of the solid oxide fuel cell system according to the embodiment of the present invention. Fig. 6 is a cross-sectional view taken along line III-III of Fig. 5. As shown in Figs. 5 and 6, the fuel cell assembly 12, the reformer 20, and the air heat exchanger 22 are arranged in sequence starting from the bottom in the sealed space 8 within the housing 6 of the fuel cell module 2 as described above.

A pure water guide pipe 60 for introducing pure water and a reformed gas guide pipe 62 for introducing the fuel gas to be reformed and reforming air are attached to an upstream end of the reformer 20. Within the reformer 20, a vaporizing section 20a and a reforming section 20b are formed in sequence starting from the upstream side thereof. The reforming section 20b is filled with a reforming catalyst. The fuel gas and air blended with water vapor introduced into the reformer 20 are reformed by the reforming catalyst filling the reformer 20.

A fuel gas supply line 64 is connected to a downstream end of the reformer 20. The fuel gas supply line 64 extends downward and further extends horizontally within a manifold 66 formed under the fuel cell assembly 12. Multiple fuel supply holes 64b are formed in a bottom surface of a horizontal portion 64a of the fuel gas supply line 64. Reformed fuel gas is supplied into the manifold 66 from the fuel supply holes 64b.

A lower support plate 68 having through holes for supporting the above-described fuel cell stacks 14 is attached to the top of the manifold 66, and fuel gas in the manifold 66 is supplied into the fuel cell unit 16.

Next, the air heat exchanger 22 is provided over the reformer 20. The air heat exchanger 22 includes an air concentration chamber 70 at the upstream side of the air heat exchanger 22 and two air distribution chambers 72 on the downstream side of the air heat exchanger 22. The air concentration chamber 70 and the air distribution chambers 72 are connected with each other by six air flow conduits 74. Here, as shown in Fig. 6, air in the air concentration chamber 70 flows from the two sets of the air flow conduits 74, each set having three air flow conduits 74 (74a, 74b, 74c, 74d, 74e, 74f), into the respective air distribution chambers 72.

Air flowing in the six air flow conduits 74 of the air heat exchanger 22 is pre-heated by rising combustion exhaust gas from the combustion chamber 18. An air guide pipe 76 is connected to each of the air distribution chambers 72. The air guide pipe 76 extends downward. A lower end of the air guide pipe 76 communicates with a lower space in the power generating chamber 10 to introduce pre-heated air into the power generating chamber 10.

Next, an exhaust gas chamber 78 is formed below the manifold 66. As shown in Fig. 6, exhaust gas conduits 80 extending in the vertical direction are formed on the insides of a front surface 6a and a rear surface 6b both of which form the faces in the longitudinal direction of the housing 6. Top ends of the exhaust gas conduits 80 communicate with a space in which the air heat exchanger 22 is disposed, and bottom ends thereof communicate with the exhaust gas chamber 78. An exhaust gas discharge pipe 82 is connected to nearly a central portion of a bottom surface of the exhaust gas chamber 78. A downstream end of the exhaust gas discharge pipe 82 is connected to the aforementioned hot-water producing device 50 shown in Fig. 2. As shown in Fig. 5, an ignition device 83 for starting the combustion of fuel gas and air is provided in the combustion chamber 18.

Next, referring to Fig. 4, the fuel cell unit 16 will be described. Fig. 4 is a partial cross-sectional view showing the fuel cell unit of the solid oxide fuel cell system according to the embodiment of the present invention. As shown in Fig. 4, the fuel cell unit 16 includes a fuel cell 84 and inner electrode terminals 86 respectively connected to top and bottom ends of the fuel cell 84. The fuel cell 84 is a tubular structure extending in the vertical direction, and includes a cylindrical inner electrode layer 90 defining a fuel gas flow path 88, a cylindrical outer electrode layer 92, and an electrolyte layer 94 between the inner electrode layer 90 and the outer electrode layer 92. In this connection, the inner electrode terminals 86 are one embodiment of the regulation unit.

Since the inner electrode terminals 86 attached to the top and bottom ends of the fuel cell 84 have the same structure, the inner electrode terminal 86 attached to the top end will be specifically described here. A top portion 90a of the inner electrode layer 90 includes an outside perimeter surface 90b and a top end surface 90c which are exposed to the electrolyte layer 94 and the outer electrode layer 92. The inner electrode terminal 86 is connected to the outside perimeter surface 90b of the inner electrode layer 90 through a conductive seal material 96, and connected directly to the top end surface 90c of the inner electrode layer 90 to be electrically connected to the inner electrode layer 90. A fuel gas flow path 98 communicating with the fuel gas flow path 88 of the inner electrode layer 90 is formed in a center portion of the inner electrode terminal 86.

The fuel cell 84 is a fuel cell of the present invention.

Next, description is given of the behavior of the solid oxide fuel cell system according to this embodiment at the suspension of operations. For carrying out the suspension of operations of the fuel cell system, the fuel cell system is stopped by shutdown in which the electric current and the supply of the fuel gas, air, and water in the fuel cell system operated at the rated temperature are shut down substantially simultaneously. At the suspension of operations, it is possible to stop the fuel cell system by gradually reducing the supply of the fuel or to stop the fuel cell system without a flow of purge gas such as N₂ gas.

The term substantially simultaneously in the shutdown means that the electric current, the air, the gas, and the water are all stopped within an extremely short period, namely, several tens of seconds. More specifically, the suspension procedures proceed as follows: the electric current is stopped; ten and several seconds later, the supply of the air and the fuel gas is stopped; and ten and several seconds later, the supply of water is stopped.

In the present invention, a method for forming the fuel gas flow path is not particularly limited, and, for example, may be a method in which the fuel electrode layer is prepared in the form of a tubular support, and the fuel gas flow through the inside of the tube; a method in which a fuel electrode, an electrolyte, and an air electrode are stacked in this order on the front surface side of an insulating porous tubular support and the fuel gas is passed through the inside of the insulating porous tubular support; a method in which flat plate-shaped solid oxide fuel cells each comprising a fuel electrode, an electrolyte, and an air electrode are stacked on each other with separators interposed therebetween, and fuel gas flow paths are formed in the separators; or the like.

In addition, the iron group element and the ceramic constituting the fuel electrode of the solid oxide fuel cell of this embodiment are less likely to diffuse. Hence, the diffusion occurring when the fuel electrode and the solid electrolyte are fired simultaneously is suppressed, so that an adverse effect on the ion conductivity of the solid electrolyte layer can be suppressed.

### Examples

The present invention will be described in further detail by way of Examples below. Note that the present invention is not limited to these examples.

### (Example 1)

A nickel oxide powder having an average particle size of 0.3 µm, a yttria-stabilized zirconia (YSZ) powder having an average particle size of 0.25 µm, a dispersant (polycarboxylic acid amine), and water were mixed by ball milling for 20 hours using yttria-stabilized zirconia balls having a diameter of 5 mm to obtain slurrys. Here, the weight ratio of NiO to YSZ was 55:45 to 65:35. Note that the sizes of 100 particles of the nickel oxide powder and the sizes of 100 particles of the YSZ powder were each averaged, where the sizes of the particles were measured under SEM observation with a magnification of 20000.

The dispersed particle size of the obtained slurry was determined by a method based on page 21 lines 4-30. The dispersed particle size of the slurry was 1.0 µm.

### (Fabrication of Composite Materials for Fuel Electrode)

Each of the obtained slurrys was dried with a spray drier to obtain a composite material for a fuel electrode.

### (Fabrication of Solid Oxide Fuel Cells)

By using each of the composite materials for a fuel electrode obtained as described above, solid oxide fuel cells were fabricated by the following method.

The composite material for a fuel electrode was mixed with an organic binder (methyl cellulose), water, and a plasticizer (glycerin), crushed into primary particles by applying a shear force thereto and molded into a tubular shape with an extrusion machine, and pre-fired at 900°C to produce fuel electrode supports. A film of a mixture of NiO and GDC10 (10 mol% Gd₂O₃-90 mol% CeO₂) at a weight ratio of 50:50 was formed on each of the fuel electrode supports by a slurry-coating method to form a fuel electrode reaction catalyst layer. Moreover, on the fuel electrode reaction catalyst layer, LDC40 (40 mol% La₂O₃-60 mol% CeO₂) and an LSGM having a composition of La_{0.9}Sr_{0.1}Ga_{0.8}Mg_{0.2}O₃ were stacked in this order by a slurry-coating method to form an electrolyte layer. The obtained molded material was fired at 1300°C. Then, a film of an LSCF having a composition of La_{0.6}Sr_{0.4}Co_{0.2}Fe_{0.8}O₃ was formed as an air electrode layer by a slurry-coating method and fired at 1050°C. Thus, 160 solid oxide fuel cells were fabricated in total. Here, 50 cells had a NiO-to-YSZ weight ratio of 55:45, 60 cells had a NiO-to-YSZ weight ratio of 60:40, and 50 cells had a NiO-to-YSZ weight ratio of 65:35.

In the fabricated solid oxide fuel cells, the fuel electrode supports had outer diameters of 10 to 10.2 mm and thicknesses of 1 to 1.2 mm, the fuel electrode reaction catalyst layers had thicknesses of 10 to 30 µm, the LDC layers had thicknesses of 3 to 40 µm, the LSGM layers had thicknesses of 20 to 50 µm, and the air electrodes had thicknesses of 18 to 24 µm. Note that, regarding the outer diameter of each fuel electrode support, a portion on which no film was formed was measured with a micrometer. Each film thickness was determined as follows. Specifically, after the operation test of the system, the cell was sliced, and the cross section was observed by SEM with any magnification in a range from 30 to 2000. Then, the sum of the maximum value and the minimum value of the film thickness was divided by 2. The cell was sliced at a central position where the air electrode was formed. The area of the air electrode was 35 cm². In addition, the average particle size of the fuel electrode support was measured by the method based on page 20 line 8 to page 21 line 3. The average particle size ratio of the nickel particles to the YSZ particles was 1.23.

### (Fabrication of Solid Oxide Fuel Cell Module)

Ag was applied as a collector onto the air electrode of each of the solid oxide fuel cells, and an electroconductive sealing member serving as both a collector and a gas seal was attached to each end portion of the fuel electrode support. Moreover, a regulation unit that regulates oxidant gas flow is provided on each end portion of the fuel electrode so as to cover the electroconductive sealing member. Thus, fuel cell units were fabricated. Note that the regulation unit had a reduced diameter portion which had a smaller diameter than the inner diameter of the fuel electrode support serving as a fuel gas flow path and which extended from the corresponding end portion of the cell to the outside of the cell. Sets of 16 fuel cell units were formed, and the 16 fuel cell units in each set were connected in series with connectors for connecting a fuel electrode and an air electrode to form a stack. 10 stacks described above were mounted, and 160 fuel cell units were connected in series. A reformer, air piping, and fuel piping were further attached thereto, and then these were surrounded by a housing. Thus, a solid oxide fuel cell module was fabricated. The fuel cell module was integrated into a solid oxide fuel cell system.

### (Example 2)

A solid oxide fuel cell module was fabricated in the same manner as in Example 1, except that a nickel oxide powder having an average particle size of 0.6 µm and a yttria-stabilized zirconia (YSZ) powder having an average particle size of 2 µm were used.

The dispersed particle size of the obtained slurry was 3.0 µm.

In addition, the particle size ratio of the average particle sizes of the nickel particles and the YSZ particles in the fuel electrode support was 3.30.

### (Example 3)

A solid oxide fuel cell module was fabricated in the same manner as in Example 1, except that PMMA having an average particle size of 3 µm was further added as a pore-forming agent to the composite material for a fuel electrode, and the composite material was crushed into primary particles by application of a shear force and molded into a tubular shape with an extrusion machine. The ratio of the composite material for a fuel electrode to the PMMA was 72:28 vol%.

The dispersed particle size of the obtained slurry was 1.0 µm.

In addition, the particle size ratio of the average particle sizes of the nickel particles and the YSZ particles in the fuel electrode support was 1.30.

### (Example 4)

A solid oxide fuel cell module was fabricated in the same manner as in Example 1, except that mixing by ball milling was conducted for 6 hours using yttria-stabilized zirconia balls having a diameter of 10 mm, the composite material was molded into a tubular shape with the extrusion machine without applying a shear force, then the composite material, and a regulation unit that regulates oxidant gas flow having no reduced diameter portion was provided.

The dispersed particle size of the obtained slurry was 8.0 µm.

In addition, the particle size ratio of the average particle sizes of the nickel particles and the YSZ particles in the fuel electrode support was 1.50.

### (Example 5)

A solid oxide fuel cell module was fabricated in the same manner as in Example 1, except that mixing by ball milling was conducted for 2 hours using yttria-stabilized zirconia balls having a diameter of 10 mm.

The dispersed particle size of the obtained slurry was 10.0 µm.

In addition, the particle size ratio of the average particle sizes of the nickel particles and the YSZ particles in the fuel electrode support was 1.42.

### (Example 6)

Solid oxide fuel cells were fabricated in the same manner as in Example 1. The same electroconductive sealing member, which served as both a collector and a gas seal, as that in Example 1 was attached to only the lower end portion of each of the fuel electrode supports, and the same regulation unit as that of Example 1 was provided to the lower end portion of the fuel electrode so as to cover the electroconductive sealing member. Thus, fuel cell units were fabricated. In other words, the fuel cell units were fabricated without providing the regulation unit on the upper end portion of each fuel cell. A solid oxide fuel cell module was fabricated in the same manner as in Example 1, except for these points.

The dispersed particle size of the obtained slurry was 1.0 µm.

In addition, the particle size ratio of the average particle sizes of the nickel particles and the YSZ particles in the fuel electrode support was 1.23.

### (Comparative Example 1)

A solid oxide fuel cell module was fabricated in the same manner as in Example 1, except that mixing by ball milling was conducted for 2 hours using yttria-stabilized zirconia balls having a diameter of 10 mm, and that the composite material was molded into a tubular shape with the extrusion machine without applying a shear force.

The dispersed particle size of the obtained slurry was 10.0 µm.

In addition, there was a 1.54 fold difference between the average particle sizes of the nickel particles and the YSZ particles in the fuel electrode support.

Next, samples for evaluating the oxidation expansion speed were prepared by using the composite materials for a fuel electrode obtained in Examples 1 to 5 and Comparative Example 1 and evaluated.

### (Fabrication of Sintered Materials)

Each of the composite materials for a fuel electrode obtained in Examples 1 to 3 and 5 was mixed with an organic binder (methyl cellulose), water, and a plasticizer (glycerin), and crushed into primary particles by applying a shear force and molded into a tubular shape with an extrusion machine. In addition, each of the composite materials for a fuel electrode obtained in Example 4 and Comparative Example 1 was mixed with an organic binder (methyl cellulose), water, and a plasticizer (glycerin), and molded into a tubular shape with the extrusion machine without applying a shear force. Each of the obtained molded materials was sintered in an air atmosphere at 1300°C to obtain a sintered material. The weight ratio of NiO to YSZ in the sintered material was 65:35.

### (Fabrication of Reduced Sintered Materials)

Each of the obtained sintered materials was reduced in hydrogen at 900°C to obtain a reduced material. The reduced material had a tubular shape with a size of 5 mm in diameter ×15 mm in length.

The fabricated fuel cell systems and the samples for evaluating the oxidation expansion speed were evaluated as follows.

### Evaluation: Shutdown Test

Each of the fabricated fuel cell systems was operated as described below, and then subjected to shutdown. Then, the appearance of the solid oxide fuel cells in the module was visually observed.

### (Power Generation by Fuel Cell Systems)

The power generation conditions were as follows: the fuel gas was City Gas 13A; the fuel utilization was 75%; the oxidant was air; the air utilization was 40%; S/C=2.25; the steady-state temperature during power generation was 700°C; and the current density was 0.2 A/cm².

### (Suspension of fuel cell systems)

Each fuel cell system was operated at the steady-state temperature for 2 hours and then was suspended by the shutdown in which the electric current and the supply of the fuel gas, the air, and the water in the fuel cell system were shut down substantially simultaneously. The module in the system was taken out, and the appearance of the solid oxide fuel cells inside the module was visually observed.

### (Evaluation: Measurement of Oxidation Expansion Speed)

The oxidation expansion rates of the obtained reduced sintered materials were measured. Each reduced sintered material was exposed to an air atmosphere at 700°C. The length of the sample in the longitudinal direction was measured. The oxidation expansion rate was calculated by (L2-L1)/L1, where L1 represents the length of the reduced material and L2 represents the length of the oxidized material at any time, and was expressed in percentage. In addition, the linear expansion coefficient per minute, i.e., the oxidation expansion speed, was calculated by (L4-L3)/L3, where L3 represents the length of the oxidized material at any time and L4 represents the length of the oxidized material one minute after L3 was measured, and expressed in percentage per minute.

**Table 1**

| | Linear expansion coefficient per minute | Maximum oxidatio n expansio n rate | Pore-forming agent | Dispersed particle size of slurry | Shear force | Regulation unit that regulates oxydant gas flow | Reduced diameter portion | Results of shutdown |
|---|---|---|---|---|---|---|---|---|
| Example 1 | 0.022% | 0.38% | Not-added | 1 µm | Applied | Present | Present | A |
| Example 2 | 0.035% | 0.31% | Not-added | 3 µm | Applied | Present | Present | A to B |
| Example 3 | 0.089% | 0.650 | Added | 1 µm | Applied | Present | Present | B |
| Example 4 | 0.090% | 0.98% | Not-added | 8 µm | Not-applied | Present | Absent | B |
| Example 5 | 0.053% | 0.66% | Not-added | 10 µm | Applied | Present | Present | B |
| Example 6 | 0.022% | 0.38% | Not-added | 1 µm | Applied | Absent | Absent | B |
| Comp. Ex. 1 | 0.096% | 1.10% | Not-added | 10 µm | Not-applied | Present | Present | C |

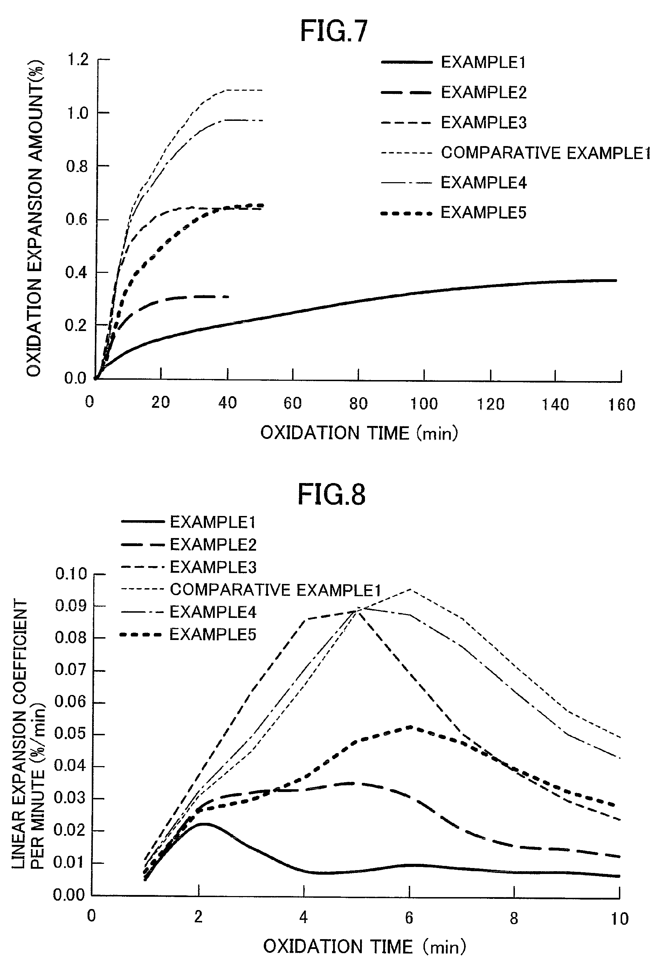

Fig. 7 shows the change in oxidation expansion rate with time observed when each of the samples was exposed to an air atmosphere at 700°C. Fig. 8 shows the results of the linear expansion coefficient per minute for 10 minutes from the start of the oxidation. In addition, Table 1 shows the results of the maximum value of the linear expansion coefficient per minute, the maximum oxidation expansion rate, and the appearance of the solid oxide fuel cell after the shutdown. Note that "A" in Table 1 indicates a case where the power generation was not affected and cracks or breakage of the electrolyte was not observed after shutdown conducted 100 times or more, "B" indicates a case where the power generation was not affected and cracks or breakage of the electrolyte was not observed after shutdown conducted 5 times or more, and "C" indicates a case where cracks or breakage of the electrolyte was caused and the performance was deteriorated by shutdown conducted less than 5 times. It has been found that excellent power generation performance can be obtained by a fuel cell system comprising the solid oxide fuel cells of the present invention.

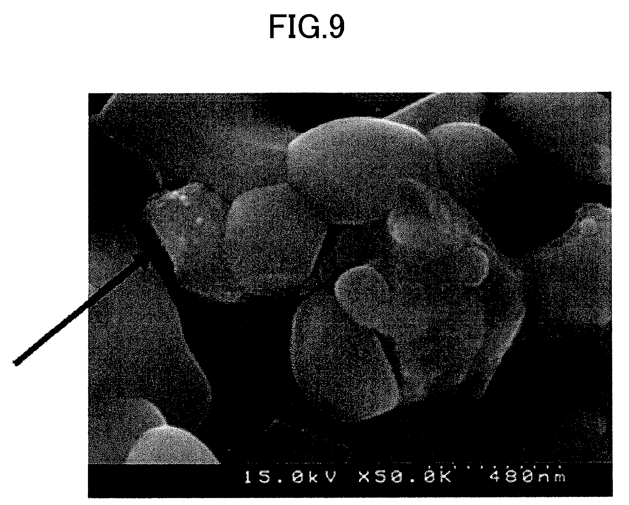

The measurement results show that the maximum oxidation expansion speed of Examples 1 and 2 was smaller than those of Examples 3, 4, and 5. Presumably for this reason, the influence on the electrolyte is small even when the shutdown is repeated, and excellent power generation performance can be obtained even when shutdown is conducted several times. A comparison between Examples 1 and 2 shows that although the maximum oxidation expansion rate of Example 1 with 0.38% was higher than that of Example 2, the cracks and breakage of the electrolyte after the shutdown were more effectively suppressed in Example 1. This suggests that the linear expansion coefficient per minute is more influential on cracks and breakage of the electrolyte caused by shutdown than the maximum oxidation expansion rate. Moreover, Figs. 7 and 8 show that the maximum value of the linear expansion coefficient per minute of Example 1 was 0.022%, which was extremely small, moreover the oxidation expansion gently occurred until the oxidation expansion rate leveled off when the rate reached about 0.4% at about 160 minutes after the test was started. Presumably for this reason, a stress due to the oxidation expansion on the gas seal portion in direct contact with the fuel electrode support is not generated abruptly, so that excellent power generation performance can be obtained more stably even when shutdown is repeated. The cause of the difference in the fuel electrode between Examples 1 to 6 and Comparative Example 1 is not clear. However, presumably, the micro structure of the fuel electrode was optimized because of the good dispersibility of the particles of the fuel electrode, so that the oxidation expansion occurred uniformly over the entire fuel electrode, and cracks in the electrolyte or cell breakage was not caused. In Comparative Example 1, where the oxidation expansion speed was very high at the initial stage, it was observed that Ni expanded outward so as to expand the skeleton as shown in Fig. 9 after the shutdown test, and the Zr skeleton collapsed (Zr atoms were separated from each other) . In Examples 1 to 6, the Zr skeleton did not collapse. Although the reason for this is not clear, presumably Ni underwent uniform oxidation expansion without expanding the skeleton, because of the good dispersibility of the particles of the fuel electrode.

## Claims

1. A solid oxide fuel cell, comprising:
a fuel gas flow path;
a fuel electrode layer provided around the fuel gas flow path and containing nickel and a stabilized zirconia;
a solid electrolyte layer provided around the fuel electrode layer; and
an air electrode layer provided around the solid electrolyte layer, wherein
a fuel gas flow into the fuel gas flow path and is exhausted through an opening provided at an end side of the fuel gas flow path, and
a regulation process for regulating oxidation expansion rate of the fuel electrode layer is performed, the oxidation expansion occurring when an oxidant gas flows into the fuel gas flow path through the opening and the solid oxide fuel cell has a high temperature that is close to temperatures during power generation,
wherein
the fuel electrode layer is obtained by extruding a composite material obtained by drying a slurry that is prepared by dispersing a metal oxide powder containing nickel and a powder containing the stabilized zirconia in a solvent, and
the regulation process comprises applying a shear force to the composite material during the extrusion to crush the composite material into primary particles.

2. The solid oxide fuel cell according to claim 1, wherein
a linear expansion coefficient per minute of the fuel electrode is 0.09% or less in a period after the oxidant gas begins to flow into the fuel gas flow path through the opening.

3. The solid oxide fuel cell according to claim 2, wherein
the regulation process comprises a step of adjusting the dispersed particle size of the slurry to less than 10 µm.

4. The solid oxide fuel cell according to any one of claims 1 to 3, wherein
the stabilized zirconia comprises yttria-stabilized zirconia.

5. The solid oxide fuel cell according to any one of claims 1 to 4, wherein
the opening is provided with a regulation unit that regulates oxidant gas flow and so as to increase a pressure loss of the oxidant gas flows into the opening.

6. The solid oxide fuel cell according to claim 5, wherein
the regulation unit comprises an oxidant gas flow regulation path having a smaller cross section than the opening, and
the oxidant gas flow regulation path communicating with the fuel gas flow path.

7. The solid oxide fuel cell according to claim 6, wherein
the regulation unit has a body covering at least the opening and a reduced diameter portion extending from the body in a projecting manner and having a smaller diameter than that of the body.

8. A fuel cell system comprising the solid oxide fuel cell according to any one of claims 1 to 7.

9. A method for producing a solid oxide fuel cell comprising:
a fuel gas flow path;
a fuel electrode layer provided around the fuel gas flow path and containing nickel and a stabilized zirconia;
a solid electrolyte layer provided around the fuel electrode layer; and
an air electrode layer provided around the solid electrolyte layer, wherein
a fuel gas is supplied from one side of the fuel gas flow path and exhausted through an opening provided on the other side of the fuel gas flow path,
the method comprising steps of performing a process for regulating oxidation expansion rate of the fuel electrode layer, the oxidation expansion occurring when an oxidant gas flows into the fuel gas flow path through the opening and the solid oxide fuel cell has a high temperature that is close to temperature during power generation, extruding a composite material obtained by drying a slurry in which a metal oxide powder containing nickel and a powder containing the stabilized zirconia are dispersed in a solvent to obtain the fuel electrode layer, and applying a shear force to the composite material during the extrusion to crush the composite material into primary particles.

10. The method for producing a solid oxide fuel cell according to claim 9, wherein
the regulation process comprises adjusting the dispersed particle size of the slurry to less than 10 µm.

## Patentansprüche

1. Festoxid-Brennstoffzelle mit:
einem Brennstoffgasströmungsweg;
einer Brennstoffelektrodenschicht, die um den Brennstoffgasströmungsweg herum vorgesehen ist und Nickel und stabilisiertes Zirkoniumoxid enthält;
einer Feststoff-Elektrolytschicht, die um die Brennstoffelektrodenschicht herum vorgesehen ist; und
einer Luftelektrodenschicht, die um die Feststoff-Elektrolytschicht herum vorgesehen ist, wobei
ein Brennstoffgas in den Brennstoffgasströmungsweg hineinfließt und durch eine Öffnung, die an einer Endseite des Brennstoffgasströmungswegs vorgesehen ist, ausgestoßen wird, und
einem Steuerprozess, um die Oxidation-Expansionsrate der Brennstoffelektrodenschicht zu steuern, wobei die Oxidationsexpansion auftritt, wenn ein Oxidationsgas in den Brennstoffgasströmungsweg durch die Öffnung hineinströmt und die Festoxid-Brennstoffzelle eine hohe Temperatur aufweist, die nahe an den Temperaturen während der Energieerzeugung ist, wobei
die Brennstoffelektrodenschicht durch Extrudieren eines Verbundmaterials erhalten wird, das durch Trocknen eines Schlickers erhalten wird, der durch Dispergieren eines Metalloxidpulvers mit Nickel und mit einem Pulver, das das stabilisierte Zirkoniumoxid enthält, in einer Lösung zubereitet wird, und
der Steuerprozess beinhaltet, eine Scherkraft auf das Verbundmaterial während der Extrudierung auszuüben, um das Verbundmaterial in Primärpartikel zu zerbrechen.

2. Festoxid-Brennstoffzelle gemäß Anspruch 1, wobei
in einem Zeitabschnitt, nachdem das Oxidationsgas beginnt, in dem Brennstoffgasströmungsweg durch die Öffnung hineinzufließen, ein Längenausdehnungskoeffizient pro Minute der Brennstoffelektrode 0,09 % oder weniger beträgt.

3. Festoxid-Brennstoffzelle gemäß Anspruch 2, wobei
der Steuerprozess einen Schritt der Anpassung der Größe der dispergierten Partikel des Schlickers auf weniger als 10 µm aufweist.

4. Festoxid-Brennstoffzelle gemäß einem der Ansprüche 1 bis 3, wobei
das stabilisierte Zirkoniumdioxid Yttriumoxid-stabilisiertes Zirkoniumdioxid aufweist.

5. Festoxid-Brennstoffzelle gemäß einem der Ansprüche 1 bis 4, wobei
an der Öffnung eine Steuereinheit vorgesehen ist, die den Oxidationsgasfluss steuert und dadurch einen Druckveriust des Oxidationsgasflusses in die Öffnung hinein erhöht,

6. Festoxid-Brennstoffzelle gemäß Anspruch 5, wobei
die Steuereinheit einen Oxidationsgasströmungs-Steuerweg aufweist, der einen kleineren Querschnitt hat als die Öffnung, wobei der Oxidationsgasströmungs-Steuerweg mit dem Brennstoffgasströmungsweg in Verbindung steht.

7. Festoxid-Brennstoffzelle gemäß Anspruch 6, wobei
die Steuereinheit einen Körper aufweist, der wenigstens die Öffnung überdeckt und einen Abschnitt mit verringertem Durchmesser aufweist, der sich von dem Körper auskragend erstreckt und einen geringeren Durchmesser als der Körper aufweist.

8. Brennstoffzellensystem mit der Festoxid-Brennstoffzelle gemäß einem der Ansprüche 1 bis 7.

9. Verfahren zur Herstellung einer Festoxid Brennstoffzelle, die aufweist einen Brennstoffgasströmungsweg;
eine Brennstoffelektrodenschicht, die um den Brennstoffgasströmungsweg herum vorgesehen ist und Nickel und stabilisiertes Zirkoniumoxid aufweist;
eine Feststoff-Elektrolytschicht, die um die Brennstoffelektrodenschicht herum vorgesehen ist; und
eine Luftelektrodenschicht, die um die Feststoff-Elektrolytschicht herum vorgesehen ist, wobei
ein Brennstoffgas von einer Seite des Brennstoffgasströmungswegs her zur Verfügung gestellt wird und durch eine Öffnung, die an der anderen Seite des Brennstoffgasströmungswegs vorgesehen ist, ausgestoßen wird,
wobei das Verfahren Schritte zur Durchführung eines Prozesses zur Steuerung der Oxidations-Expansionsrate der Brennstoffelektrodenschicht aufweist, wobei die Oxidationsexpansion auftritt, wenn ein Oxidationsgas in dem Brennstoffgasströmungsweg durch die Öffnung hineinfließt und die Festoxid-Brennstoffzelle eine hohe Temperatur hat, die nahe einer Temperatur während der Energieerzeugung ist; einschließlich einem Extrudieren eines Verbundmaterials, das durch Trocknen eines Schlickers erhalten wird, in welchem ein Metalloxidpulver mit Nickel und ein Pulver, das das stabilisierte Zirkoniumoxid enthält, in einer Lösung dispergiert wird, um die Brennstoffelektrodenschicht zu erhalten, und einem Ausüben einer Scherkraft auf das Verbundmaterial während der Extrudierung, um das Verbundmaterial in Primärartikel zu zerbrechen.

10. Verfahren zur Herstellung einer Festoxid-Brennstoffzelle gemäß Anspruch 9, wobei
der Steuerungsprozess beinhaltet, die Größe der dispergierten Partikel des Schlickers auf weniger als 10 µm einzustellen.

## Revendications

1. Pile à combustible à oxyde solide, comprenant :
un passage d'écoulement de gaz combustible ;
une couche d'électrode à combustible disposée autour du passage d'écoulement de gaz combustible et contenant du nickel et une zircone stabilisée;
une couche d'électrolyte solide disposée autour de la couche d'électrode à combustible ; et
une couche d'électrode à air disposée autour de la couche d'électrolyte solide, dans laquelle
un gaz combustible s'écoule dans le passage d'écoulement de gaz combustible et est évacué par une ouverture disposée sur un côté d'extrémité du passage d'écoulement de gaz combustible, et
un procédé de régulation destiné à réguler le taux de dilatation par oxydation de la couche d'électrode à combustible est effectué, la dilatation par oxydation survenant quand un gaz oxydant s'écoule dans le passage d'écoulement de gaz combustible par l'ouverture et la pile à combustible à oxyde solide a une température élevée qui est proche de températures pendant la production d'énergie, dans laquelle
la couche d'électrode à combustible est obtenue en extrudant un matériau combustible obtenu en séchant une suspension qui est préparée en dispersant une poudre d'oxyde métallique contenant du nickel et une poudre contenant la zircone stabilisée dans un solvant, et
le procédé de régulation comprend l'application d'une force de cisaillement au matériau composite pendant l'extrusion pour concasser le matériau composite en particules primaires.

2. Pile à combustible à oxyde solide selon la revendication 1, dans laquelle un coefficient de dilatation linéaire par minute de l'électrode à combustible est de 0,09 % ou moins dans une période après que le gaz oxydant a commencé à s'écouler dans le passage d'écoulement de gaz combustible par l'ouverture.

3. Pile à combustible à oxyde solide selon la revendication 2, dans laquelle
le procédé de régulation comprend une étape d'ajustement de la taille des particules dispersées de la suspension à moins de 10 µm.

4. Pile à combustible à oxyde solide selon l'une quelconque des revendications 1 à 3, dans laquelle
la zircone stabilisée comprend de la zircone stabilisée à l'oxyde d'yttrium.

5. Pile à combustible à oxyde solide selon l'une quelconque des revendications 1 à 4, dans laquelle
l'ouverture est pourvue d'une unité de régulation qui régule l'écoulement de gaz oxydant et de manière à augmenter une perte de pression de l'écoulement de gaz oxydant dans l'ouverture.

6. Pile à combustible à oxyde solide selon la revendication 5, dans laquelle
l'unité de régulation comprend un passage de régulation d'écoulement de gaz oxydant ayant une section transversale plus petite que l'ouverture, et
le passage de régulation d'écoulement de gaz oxydant communique avec le passage d'écoulement de gaz combustible.

7. Pile à combustible à oxyde solide selon la revendication 6, dans laquelle
l'unité de régulation a un corps recouvrant au moins l'ouverture et une partie de diamètre réduit s'étendant depuis le corps à la manière d'une saillie et ayant un diamètre plus petit que celui du corps.

8. Système de pile à combustible comprenant la pile à combustible à oxyde solide selon l'une quelconque des revendications 1 à 7.

9. Procédé de production d'une pile à combustible à oxyde solide comprenant :
un passage d'écoulement de gaz combustible;
une couche d'électrode à combustible disposée autour du passage d'écoulement de gaz combustible et contenant du nickel et une zircone stabilisée;
une couche d'électrolyte solide disposée autour de la couche d'électrode à combustible; et
une couche d'électrode à air disposée autour de la couche d'électrolyte solide, dans lequel
un gaz combustible est fourni depuis un côté du passage d'écoulement de gaz combustible et évacué par une ouverture disposée sur l'autre côté du passage d'écoulement de gaz combustible,
le procédé comprenant les étapes consistant à effectuer un procédé destiné à réguler le taux de dilatation par oxydation de la couche d'électrode à combustible, la dilatation par oxydation survenant quand un gaz oxydant s'écoule dans le passage d'écoulement de gaz combustible par l'ouverture et la pile à combustible à oxyde solide a une température élevée qui est proche d'une température pendant la production d'énergie, extruder un matériau composite obtenu en séchant une suspension dans laquelle une poudre d'oxyde métallique contenant du nickel et une poudre contenant la zircone stabilisée sont dispersées dans un solvant pour obtenir la couche d'électrode à combustible, et appliquer une force de cisaillement au matériau composite pendant l'extrusion pour concasser le matériau composite en particules primaires.

10. Procédé de production d'une pile à combustible à oxyde solide selon la revendication 9, dans lequel
le procédé de régulation comprend l'ajustement de la taille des particules dispersées de la suspension à moins de 10 µm.
